(19) Europäisches Patentamt
European Patent Office
Office européen des brevets

(11) EP 4 325 603 B1

(12) EUROPEAN PATENT SPECIFICATION

(45) Date of publication and mention of the grant of the patent:
**11.03.2026 Bulletin 2026/11**

(21) Application number: **21937039.2**

(22) Date of filing: **17.12.2021**

(51) International Patent Classification (IPC):
***H01M 4/62*** (2006.01) ***H01B 1/06*** (2006.01)
***C01F 17/30*** (2020.01) ***H01M 6/18*** (2006.01)
***H01M 10/0562*** (2010.01) ***H01M 10/0585*** (2010.01)
***H01B 1/08*** (2006.01)

(52) Cooperative Patent Classification (CPC):
**H01M 10/0562; C01F 17/30; H01B 1/08; H01M 4/62; H01M 6/18; H01M 10/052; H01M 10/0585;** H01M 2300/0071; Y02E 60/10

(86) International application number:
**PCT/JP2021/046671**

(87) International publication number:
**WO 2022/219846 (20.10.2022 Gazette 2022/42)**

(54) **SOLID ELECTROLYTE MATERIAL AND BATTERY USING SAME**

FESTELEKTROLYTMATERIAL UND BATTERIE DAMIT

MATÉRIAU D'ÉLECTROLYTE SOLIDE ET BATTERIE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2021 JP 2021068993**

(43) Date of publication of application:
**21.02.2024 Bulletin 2024/08**

(73) Proprietor: **Panasonic Intellectual Property Management Co., Ltd.**
**Kadoma-shi, Osaka 571-0057 (JP)**

(72) Inventors:
- **NARUSE, Takuya**
  **Kadoma-shi Osaka 571-0057 (JP)**
- **YOKOYAMA, Tomoyasu**
  **Kadoma-shi Osaka 571-0057 (JP)**

(74) Representative: **Grünecker Patent- und Rechtsanwälte**
**PartG mbB**
**Leopoldstraße 4**
**80802 München (DE)**

(56) References cited:
**WO-A1-2020/137043** **WO-A1-2020/137043**
**WO-A1-2021/002064** **WO-A1-2021/002064**
**US-A1- 2021 280 906** **US-A1- 2022 102 753**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 325 603 B1

## Description

### Technical Field

The present disclosure relates to a solid electrolyte material and a battery using the same.

### Background Art

PTL 1 discloses a lithium ion-conductive solid electrolyte material constituted of Li, La, O, and X and an all-solid-state battery using the material. Here, X is at least one element selected from the group consisting of Cl, Br, and I. Further Examples of lithium ion-conductive solid electrolyte materials constituted of Li, La, O, and X are disclosed in PTL 2.

### Citation List

### Patent Literature

PTL 1: WO 2020/137043 A1
PTL 2: WO 2021/002064 Al

### Summary of Invention

### Technical Problem

It is an object of the present disclosure to provide a solid electrolyte material suitable for improving lithium ion conductivity.

### Solution to Problem

The solid electrolyte material of the present disclosure consists of Li, La, O, and I wherein the solid electrolyte material is represented by a following compositional formula (1):

$$Li_aLa_bOI_c \qquad (1)$$

wherein $0 < a$, $0 < b$, $(a + b) < 4.0$ and $c = 3.0$ are satisfied.

### Advantageous Effects of Invention

The present disclosure provides a solid electrolyte material suitable for improving lithium ion conductivity.

### Brief Description of Drawings

[Fig. 1] Fig. 1 shows a cross-sectional view of a battery 1000 according to a second embodiment.
[Fig. 2] Fig. 2 is a cross-sectional view of an electrode material 1100 according to the second embodiment.
[Fig. 3] Fig. 3 shows a schematic diagram of a compression molding dies 300 used for evaluation of the ion conductivity of a solid electrolyte material.
[Fig. 4] Fig. 4 is a graph showing a cole-cole plot obtained by impedance measurement of a solid electrolyte material of Example 1.
[Fig. 5] Fig. 5 is a graph showing the initial charge and discharge characteristics of a battery of Example 1.

### Description of Embodiments

Embodiments of the present disclosure will now be described with referent to the drawings. The present disclosure is not limited to the following embodiments.

(First embodiment)

The solid electrolyte material according to a first embodiment consists of Li, La, O, and I, wherein the solid electrolyte material is represented by a following compositional formula (1):

$$Li_aLa_bOI_c \qquad (1)$$

wherein $0 < a$, $0 < b$, $(a + b) < 4.0$ and $c = 3.0$ are satisfied.

The solid electrolyte material according to the first embodiment is a solid electrolyte material suitable for improving lithium ion conductivity. The solid electrolyte material according to the first embodiment can have, for example, practical lithium ion conductivity and can have, for example, high lithium ion conductivity. Here, high lithium ion conductivity is, for example, greater than or equal to $5 \times 10^{-5}$ S/cm at around room temperature (e.g., 25°C). That is, the solid electrolyte material according to the first embodiment can have, for example, an ion conductivity of greater than or equal to $5 \times 10^{-5}$ S/cm.

The solid electrolyte material according to the first embodiment can be used for obtaining a battery with excellent charge and discharge characteristics. An example of the battery is an all-solid-state battery. The all-solid-state battery may be a primary battery or a secondary battery.

The solid electrolyte material according to the first embodiment does not substantially contain sulfur. The fact that the solid electrolyte material according to the first embodiment does not substantially contain sulfur means that the solid electrolyte material does not contain sulfur as a constitutional element, except for sulfur inevitably mixed as an impurity. In this case, the amount of sulfur as an impurity mixed in the solid electrolyte material is, for example, less than or equal to 1 mol%. The solid electrolyte material according to the first embodiment does not contain sulfur. A solid electrolyte material not containing sulfur does not generate hydrogen sulfide, even if it is exposed to the atmosphere, and is therefore excellent in safety. The sulfide solid electrolyte disclosed in PTL 1 may generate hydrogen sulfide when exposed to the atmosphere.

The solid electrolyte material according to the first embodiment may contain inevitably mixed elements. Examples of the element are hydrogen and nitrogen. Such an element may be present in the raw material powders of the solid electrolyte material or in the atmosphere for manufacturing or storing the solid electrolyte material. The amount of the elements inevitably mixed in the solid electrolyte material according to the first embodiment as described above is, for example, less than or equal to 1 mol%.

The solid electrolyte material according to the first embodiment is a material represented by the following compositional formula (1):

$$Li_aLa_bOI_c \qquad (1)$$

here, $0 < a$, $0 < b$, $(a + b) < 4.0$, and $c=3.0$ are satisfied.

The solid electrolyte material represented by the compositional formula (1) has high ion conductivity.

In order to enhance the ion conductivity of the solid electrolyte material, in the compositional formula (1), $0.5 \leq a \leq 2.3$ and $0.7 \leq b \leq 1.5$ may be satisfied.

**In** order to enhance the ion conductivity of the solid electrolyte material, in the compositional formula (1), $0.5 \leq a \leq 2.0$ and $1.0 \leq b \leq 1.5$ may be satisfied.

In order to further enhance the ion conductivity of the solid electrolyte material, in the compositional formula (1), $0.8 \leq a \leq 2.0$ and $1.0 \leq b \leq 1.4$ may be satisfied.

The upper limit and lower limit of the range of "a" in the compositional formula (1) may be prescribed by an arbitrary combination of numerical values selected from the group consisting of 0.50, 0.60, 0.80, 1.00, 1.20, 1.40, and 2.00.

The upper limit and lower limit of the range of "b" in the compositional formula (1) may be prescribed by an arbitrary combination of numerical values selected from the group consisting of 1.00, 1.20, 1.27, 1.33, 1.40, 1.47, and 1.50.

In order to enhance the ion conductivity of the solid electrolyte material, in the compositional formula (1), $c = 3.0$ is satisfied. That is, the compositional formula (1) is $Li_aLa_bOI_{3.0}$.

The solid electrolyte material according to the first embodiment may be crystalline or amorphous.

The shape of the solid electrolyte material according to the first embodiment is not limited. Examples of the shape are needle, spherical, and oval spherical shapes. The solid electrolyte material according to the first embodiment may be a particle. The solid electrolyte material according to the first embodiment may have a pellet or planar shape.

When the shape of the solid electrolyte material according to the first embodiment is, for example, a particulate shape (e.g., spherical), the solid electrolyte material may have a median diameter of greater than or equal to 0.1 μm and less than or equal to 100 μm or a median diameter of greater than or equal to 0.5 μm and less than or equal to 10 μm. Consequently, the solid electrolyte material according to the first embodiment and another material can be well dispersed.

The median diameter of particles means the particle diameter (d50) at the accumulated volume of 50% in a volume-based particle size distribution. The volume-based particle size distribution can be measured with a laser diffraction measurement apparatus or an image analyzer.

<Method for manufacturing solid electrolyte material>

The solid electrolyte material according to the first embodiment can be, manufactured by, for example, the following method.
Raw material powders are provided so as to give a target composition.
As an example, when the composition of a target solid electrolyte material is $Li_{2.0}La_{1.0}OI_3$, a $Li_2O$ raw material powder and a $LaI_3$ raw material powder are mixed at a molar ratio of 1.0 : 1.0. The raw material powders may be mixed at a molar ratio adjusted in advance such that a composition change which may occur during the synthesis process is offset.
For example, raw material powders are mechanochemically reacted (i.e., using a mechanochemical method) with each other in a mixing apparatus such as a planetary ball mill to obtain a reaction product.
The solid electrolyte material according to the first embodiment is obtained by such a method.
The composition of the solid electrolyte material can be determined by, for example, ICP emission spectrometry, ion chromatography, an inert gas fusion-infrared absorbing method, or an electron probe micro analyzer (EPMA) method. For example, the compositions of Li and La are determined by ICP emission spectrometry, the composition of I is determined by ion chromatography, and O can be measured by an inert gas fusion-infrared absorbing method.

(Second embodiment)

A second embodiment of the present disclosure will now be described. The matters described in the first embodiment may be omitted.
In the second embodiment, a battery using the solid electrolyte material according to the first embodiment will be described.
The battery according to the second embodiment includes a positive electrode, a negative electrode, and an electrolyte layer. The electrolyte layer is disposed between the positive electrode and the negative electrode. At least one selected from the group consisting of the positive electrode, the electrolyte layer, and the negative electrode contains the solid electrolyte material according to the first embodiment.
The battery according to the second embodiment contains the solid electrolyte material according to the first embodiment and therefore has excellent charge and discharge characteristics. The battery may be an all-solid-state battery.
Fig. 1 shows a cross-sectional view of a battery 1000 according to the second embodiment.
The battery 1000 according to the second embodiment includes a positive electrode 201, an electrolyte layer 202, and a negative electrode 203. The electrolyte layer 202 is disposed between the positive electrode 201 and the negative electrode 203.
The positive electrode 201 contains a positive electrode active material particle 204 and a solid electrolyte particle 100.
The electrolyte layer 202 contains an electrolyte material. The electrolyte material is, for example, a solid electrolyte material.
The negative electrode 203 contains a negative electrode active material particle 205 and a solid electrolyte particle 100.
The solid electrolyte particle 100 includes the solid electrolyte material according to the first embodiment. The solid electrolyte particle 100 may be a particle including the solid electrolyte material according to the first embodiment as a main component. The particle including the solid electrolyte material according to the first embodiment as a main component means a particle in which the component with the highest molar ratio is the solid electrolyte material according to the first embodiment. The solid electrolyte particle 100 may be a particle consisting of the solid electrolyte material according to the first embodiment.
The solid electrolyte particle 100 may have a median diameter of greater than or equal to 0.1 μm and less than or equal to 100 μm or a median diameter of greater than or equal to 0.5 μm and less than or equal to 10 μm. In such a case, the solid electrolyte particle 100 has higher ion conductivity.
The positive electrode 201 contains a material that can occlude and release metal ions such as lithium ions. The positive electrode 201 contains, for example, a positive electrode active material (for example, the positive electrode active material particle 204).
Examples of the positive electrode active material are a lithium-containing transition metal oxide, a transition metal fluoride, a polyanionic material, a fluorinated polyanionic material, a transition metal sulfide, a transition metal oxyfluoride, a transition metal oxysulfide, and a transition metal oxynitride. Examples of the lithium-containing transition metal oxide are $LiNi_{1-a-f}Co_dAl_fO_2$ (here, $0 < d$, $0 < f$, and $0 < (d + f) < 1$) and $LiCoO_2$.
From the viewpoint of the cost and safety of the battery 1000, lithium phosphate may be used as a positive electrode active material.

The positive electrode 201 may contain a transition metal oxyfluoride as a positive electrode active material, in addition to the solid electrolyte material according to the first embodiment. The solid electrolyte material according to the first embodiment, even if it is fluorinated by the transition metal oxyfluoride, hardly forms a resistive layer. As a result, the battery 1000 has high charge and discharge efficiency.

The transition metal oxyfluoride contains oxygen and fluorine. As an example, the transition metal oxyfluoride may be a compound represented by $Li_pMe'_qO_mF_n$, where Me' is at least one selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, and mathematical expressions: $0.5 \leq p \leq 1.5$, $0.5 \leq q \leq 1.0$, $1 \leq m < 2$, and $0 < n \leq 1$ are satisfied. An example of such a transition metal oxyfluoride is $Li_{1.05}(Ni_{0.35}Co_{0.35}Mn_{0.3})_{0.95}O_{1.9}F_{0.1}$.

The positive electrode active material particle 204 may have a median diameter of greater than or equal to 0.1 μm and less than or equal to 100 μm. When the positive electrode active material particle 204 has a median diameter of greater than or equal to 0.1 μm, the positive electrode active material particle 204 and the solid electrolyte particle 100 can be well dispersed in the positive electrode 201. Consequently, the charge and discharge characteristics of the battery are improved. When the positive electrode active material particle 204 has a median diameter of less than or equal to 100 μm, the lithium diffusion speed in the positive electrode active material particle 204 is improved. Consequently, the battery can operate at high output.

The positive electrode active material particle 204 may have a median diameter larger than that of the solid electrolyte particle 100. Consequently, the positive electrode active material particle 204 and the solid electrolyte particle 100 can be well dispersed.

In order to increase the energy density and output of the battery, in the positive electrode 201, the ratio of the volume of the positive electrode active material particle 204 to the sum of the volume of the positive electrode active material particle 204 and the volume of the solid electrolyte particle 100 may be greater than or equal to 0.30 and less than or equal to 0.95.

Fig. 2 shows a cross-sectional view of an electrode material 1100 according to the second embodiment. The electrode material 1100 is included in, for example, the positive electrode 201. In order to prevent the solid electrolyte particle 100 from reacting with a positive electrode active material (i.e., electrode active material particle 206), a covering layer 216 may be formed on the surface of the electrode active material particle 206. Consequently, it is possible to suppress the increase in the reaction overpotential of the battery. Examples of the covering material included in the covering layer 216 are a sulfide solid electrolyte, an oxide solid electrolyte, and a halide solid electrolyte. The covering material may be lithium niobate which has excellent stability even at high potential.

The positive electrode 201 may be composed of a first positive electrode layer containing a first positive electrode active material and a second positive electrode layer containing a second positive electrode active material. Here, the second positive electrode layer is disposed between the first positive electrode layer and the electrolyte layer 202. The first positive electrode layer and the second positive electrode layer contain the solid electrolyte material according to the first embodiment, and a covering layer may be formed on the surface of the second positive electrode active material. According to the configuration above, it is possible to suppress the solid electrolyte material according to the first embodiment included in the electrolyte layer 202 from being oxidized by the second positive electrode active material. As a result, the battery has a high charging capacity. Examples of the covering material included in the covering layer 216 are a sulfide solid electrolyte, an oxide solid electrolyte, a polymer solid electrolyte, and a halide solid electrolyte. The first positive electrode active material may be the same material as the second positive electrode active material or may be a different material from the second positive electrode active material.

In order to increase the energy density and output of the battery, the positive electrode 201 may have a thickness of greater than or equal to 10 μm and less than or equal to 500 μm.

The electrolyte layer 202 contains an electrolyte material. The electrolyte material is, for example, a solid electrolyte material. The electrolyte layer 202 may be a solid electrolyte layer. The electrolyte layer 202 may contain the solid electrolyte material according to the first embodiment. The electrolyte layer 202 may consist of the solid electrolyte material according to the first embodiment only.

Hereinafter, the solid electrolyte material according to the first embodiment is referred to as a first solid electrolyte material, and the solid electrolyte material that is different from the solid electrolyte material according to the first embodiment is referred to as a second solid electrolyte material.

The electrolyte layer 202 may contain the second solid electrolyte material. The electrolyte layer 202 may consist of the second solid electrolyte material only.

The electrolyte layer 202 may contain not only the first solid electrolyte material but also the second solid electrolyte material. The first solid electrolyte material and the second solid electrolyte material may be uniformly dispersed in the electrolyte layer 202.

The electrolyte layer 202 may have a thickness of greater than or equal to 1 μm and less than or equal to 100 μm. When the electrolyte layer 202 has a thickness of greater than or equal to 1 μm, the positive electrode 201 and the negative electrode 203 are less likely to be short-circuited. When the electrolyte layer 202 has a thickness of less than or equal to 100 μm, the battery can operate at high output.

Another electrolyte layer (i.e., second electrolyte layer) may be further provided between the electrolyte layer 202 and the negative electrode 203. For example, when the electrolyte layer 202 includes the first solid electrolyte material, the second electrolyte layer may be constituted of another solid electrolyte material that is electrochemically more stable than the first solid electrolyte material. Specifically, the reduction potential of the solid electrolyte material constituting the second electrolyte layer may be lower than that of the first solid electrolyte material. Consequently, the first solid electrolyte material can be used without being reduced. As a result, the charge and discharge efficiency of the battery can be improved.

The negative electrode 203 contains a material that can occlude and release metal ions such as lithium ions. The negative electrode 203 contains, for example, a negative electrode active material (for example, the negative electrode active material particle 205).

Examples of the negative electrode active material are a metal material, a carbon material, an oxide, a nitride, a tin compound, and a silicon compound. The metal material may be a single metal or an alloy. Examples of the metal material are a lithium metal and a lithium alloy. Examples of the carbon material are natural graphite, coke, graphitizing carbon, carbon fibers, spherical carbon, artificial graphite, and amorphous carbon. From the viewpoint of the capacity density, suitable examples of the negative electrode active material are silicon (i.e., Si), tin (i.e., Sn), a silicon compound, and a tin compound.

The negative electrode active material may be selected based on the reduction resistance of the solid electrolyte material included in the negative electrode 203. When the negative electrode 203 contains the solid electrolyte material according to the first embodiment, a material that can occlude and release lithium ions at greater than or equal to 0 V against lithium may be used as the negative electrode active material. When the negative electrode active material is such a material, it is possible to suppress the reduction of the first solid electrolyte material included in the negative electrode 203. As a result, the battery has high charge and discharge efficiency. Examples of the material are titanium oxide, an indium metal, and a lithium alloy. Examples of the titanium oxide are $Li_4Ti_5O_{12}$, $LiTi_2O_4$, and $TiO_2$.

The negative electrode active material particle 205 may have a median diameter of greater than or equal to 0.1 μm and less than or equal to 100 μm. When the negative electrode active material particle 205 has a median diameter of greater than or equal to 0.1 μm, the negative electrode active material particle 205 and the solid electrolyte particle 100 can be well dispersed in the negative electrode 203. Consequently, the charge and discharge characteristics of the battery are improved. When the negative electrode active material particle 205 has a median diameter of less than or equal to 100 μm, the lithium diffusion speed in the negative electrode active material particle 205 is improved. Consequently, the battery can operate at high output.

The negative electrode active material particle 205 may have a median diameter larger than that of the solid electrolyte particle 100. Consequently, the negative electrode active material particle 205 and the solid electrolyte particle 100 can be well dispersed.

In order to increase the energy density and output of the battery, in the negative electrode 203, the ratio of the volume of the negative electrode active material particle 205 to the sum of the volume of the negative electrode active material particle 205 and the volume of the solid electrolyte particle 100 may be greater than or equal to 0.30 and less than or equal to 0.95.

The electrode material 1100 shown in Fig. 2 may be included in the negative electrode 202. In order to prevent the solid electrolyte particle 100 from reacting with the negative electrode active material (i.e., electrode active material particle 206), a covering layer 216 may be formed on the surface of the electrode active material particle 206. Consequently, the battery has high charge and discharge efficiency. Examples of the covering material included in the covering layer 216 are a sulfide solid electrolyte, an oxide solid electrolyte, a polymer solid electrolyte, and a halide solid electrolyte.

When the solid electrolyte particle 100 is the first solid electrolyte material, the covering material may be a sulfide solid electrolyte or a polymer solid electrolyte. An example of the sulfide solid electrolyte is $Li_2S$-$P_2S_5$. Examples of the polymer solid electrolyte are polyethylene oxide and a conjugated compound of a lithium salt. An example of such a polymer solid electrolyte is lithium bis(trifluoromethanesulfonyl)imide.

In order to increase the energy density and output of the battery, the negative electrode 203 may have a thickness of greater than or equal to 10 μm and less than or equal to 500 μm.

At least one selected from the group consisting of the positive electrode 201, the electrolyte layer 202, and the negative electrode 203 may contain a second solid electrolyte material for the purpose of enhancing the ion conductivity, chemical stability, and electrochemical stability. Examples of the second solid electrolyte material are a sulfide solid electrolyte, an oxide solid electrolyte, a halide solid electrolyte, and an organic polymer solid electrolyte.

In the present disclosure, the "sulfide solid electrolyte" means a solid electrolyte containing sulfur. The "oxide solid electrolyte" means a solid electrolyte containing oxygen. The oxide solid electrolyte may contain an anion (provided that sulfur and halogen elements are excluded) other than oxygen. The "halide solid electrolyte" means a solid electrolyte containing a halogen element and not containing sulfur. The halide solid electrolyte may contain not only a halogen element but also oxygen.

Examples of the sulfide solid electrolyte are $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$.

Examples of the oxide solid electrolyte are:

(i) an NASICON-type solid electrolyte, such as $LiTi_2(PO_4)_3$ or its element substitute;
(ii) a perovskite-type solid electrolyte, such as $(LaLi)TiO_3$;
(iii) an LISICON-type solid electrolyte, such as $Li_{14}ZnGe_4O_{16}$, $Li_4SiO_4$, $LiGeO_4$, or its element substitute;
(iv) a gamet-type solid electrolyte, such as $Li_7La_3Zr_2O_{12}$ or its element substitute; and
(v) $Li_3PO_4$ or its N-substitute.

Examples of the halide solid electrolyte material are compounds represented by $Li_aMe_bY_cZ_6$. Here, mathematical expressions: $a + mb + 3c = 6$ and $c > 0$ are satisfied; Me is at least one element selected from the group consisting of metal elements and metalloid elements excluding Li and Y; Z is at least one selected from the group consisting of F, Cl, Br, and I; and the value of m represents the valence of Me.

The "metalloid elements" are B, Si, Ge, As, Sb, and Te. The "metal elements" are all elements (excluding hydrogen) included in Groups 1 to 12 of the periodic table and all elements (excluding B, Si, Ge, As, Sb, Te, C, N, P, O, S, and Se) included in Groups 13 to 16 of the periodic table.

In order to enhance the ion conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb. As the halide solid electrolyte, for example, $Li_3YCl_6$ or $Li_3YBr_6$ is used.

When the electrolyte layer 202 contains the first solid electrolyte material, the negative electrode 203 may contain a sulfide solid electrolyte. Consequently, the sulfide solid electrolyte which is electrochemically stable against the negative electrode active material can suppress the contact between the first solid electrolyte material and the negative electrode active material. As a result, the internal resistance of the battery is reduced.

Examples of the organic polymer solid electrolyte are a polymer compound and a compound of a lithium salt. The polymer compound may have an ethylene oxide structure. A polymer compound having an ethylene oxide structure can contain a large amount of a lithium salt and therefore can further enhance the ion conductivity.

Examples of the lithium salt are $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used.

At least one selected from the group consisting of the positive electrode 201, the electrolyte layer 202, and the negative electrode 203 may contain a nonaqueous electrolytic liquid, a gel electrolyte, or an ionic liquid for the purpose of facilitating the transfer of lithium ions and improving the output characteristics of the battery.

The nonaqueous electrolytic liquid contains a nonaqueous solvent and a lithium salt dissolved in the nonaqueous solvent.

Examples of the nonaqueous solvent are a cyclic carbonate solvent, a chain carbonate solvent, a cyclic ether solvent, a chain ether solvent, a cyclic ester solvent, a chain ester solvent, and a fluorine solvent. Examples of the cyclic carbonate solvent are ethylene carbonate, propylene carbonate, and butylene carbonate. Examples of the chain carbonate solvent are dimethyl carbonate, ethyl methyl carbonate, and diethyl carbonate. Examples of the cyclic ether solvent are tetrahydrofuran, 1,4-dioxane, and 1,3-dioxolane. Examples of the chain ether solvent are 1,2-dimethoxyethane and 1,2-diethoxyethane. An example of the cyclic ester solvent is $\gamma$-butyrolactone. An example of the chain ester solvent is methyl acetate. Examples of the fluorine solvent are fluoroethylene carbonate, methyl fluoropropionate, fluorobenzene, fluoroethyl methyl carbonate, and fluorodimethylene carbonate. One nonaqueous solvent selected from these solvents may be used alone. Alternatively, a mixture of two or more nonaqueous solvents selected from these solvents may be used.

Examples of the lithium salt are $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used. The concentration of the lithium salt may be, for example, greater than or equal to 0.5 mol/L and less than or equal to 2 mol/L.

As the gel electrolyte, a polymer material impregnated with a nonaqueous electrolytic liquid can be used. Examples of the polymer material are polyethylene oxide, polyacrylonitrile, polyvinylidene fluoride, polymethyl methacrylate, and a polymer having an ethylene oxide bond.

Examples of the cation included in the ionic liquid are:

(i) an aliphatic chain quaternary salt, such as tetraalkylammonium or tetraalkylphosphonium;
(ii) an alicyclic ammonium, such as a pyrrolidinium, a morpholinium, an imidazolinium, a tetrahydropyrimidinium, a piperazinium, or a piperidinium; and
(iii) a nitrogen-containing heterocyclic aromatic cation, such as a pyridinium or an imidazolium.

Examples of the anion included in the ionic liquid are $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, and $C(SO_2CF_3)_3^-$.
The ionic liquid may contain a lithium salt.
At least one selected from the group consisting of the positive electrode 201, the electrolyte layer 202, and the negative electrode 203 may contain a binder for the purpose of improving the adhesion between individual particles.
Examples of the binder are polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose. A copolymer can also be used as the binder. Examples of the binder are copolymers of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from the above-mentioned materials may be used as the binder.
At least one selected from the positive electrode 201 and the negative electrode 203 may contain a conductive assistant for the purpose of enhancing the electron conductivity.
Examples of the conductive assistant are:

(i) graphite, such as natural graphite or artificial graphite;
(ii) carbon black, such as acetylene black or Ketjen black;
(iii) a conductive fiber, such as a carbon fiber or a metal fiber;
(iv) carbon fluoride;
(v) a metal powder, such as aluminum;
(vi) a conductive whisker, such as zinc oxide or potassium titanate;
(vii) a conductive metal oxide, such as titanium oxide; and
(viii) a conductive polymer compound, such as polyanion, polypyrrole, or polythiophene.

In order to reduce the cost, the conductive assistant of the above (i) or (ii) may be used.
Examples of the shape of the battery according to the second embodiment are coin type, cylindrical type, square type, sheet type, button type, flat type, and laminated type.
The battery according to the second embodiment may be manufactured by, for example, providing a material for forming the positive electrode, a material for forming the electrolyte layer, and a material for forming the negative electrode and producing a layered product in which the positive electrode, the electrolyte layer, and the negative electrode are disposed in this order by a known method.

EXAMPLES

The present disclosure will now be described in more detail with reference to Examples and Comparative Examples.

(Example 1)

[Production of solid electrolyte material]

$Li_2O$ and $LaI_3$ were provided as raw material powders at a molar ratio of $Li_2O$ : $LaI_3$ of 1.0 : 1.0 in an argon atmosphere having a dew point of less than or equal to -60°C (hereinafter, referred to as "dry argon atmosphere"). The mixture of these raw material powders was milled with a planetary ball mill at 500 rpm for 30 hours. Thus, a powder of the solid electrolyte material of Example 1 was obtained. The solid electrolyte material of Example 1 had a composition represented by $Li_{2.0}LaOI_{3.0}$. The composition here is a charge composition calculated from the charge amount. It was confirmed in advance that the composition of the obtained solid electrolyte material was almost the same as the charge composition in the manufacturing method used in the present example.

[Evaluation of ion conductivity]

Fig. 3 shows a schematic diagram of a compression molding dies 300 used for evaluation of the ion conductivity of a solid electrolyte material.

The compression molding dies 300 included a punch upper part 301, a die 302, and a punch lower part 303. The die 302 was formed from insulating polycarbonate. The punch upper part 301 and the punch lower part 303 were both formed from electron-conductive stainless steel.

The ion conductivity of the solid electrolyte material of Example 1 was measured using the compression molding dies 300 shown in Fig. 3 by the following method.

The powder of the solid electrolyte material of Example 1 (i.e., the powder 101 of the solid electrolyte material in Fig. 3) was loaded inside the compression molding dies 300 in a dry atmosphere having a dew point of less than or equal to -30°C. A pressure of 400 MPa was applied to the solid electrolyte material of Example 1 inside the compression molding dies 300 using the punch upper part 301.

The punch upper part 301 and the punch lower part 303 were connected to a potentiostat (Bio-Logic Science Instruments Ltd, VMP-300) equipped with a frequency response analyzer, while applying the pressure. The punch upper part 301 was connected to the working electrode and the potential measurement terminal. The punch lower part 303 was connected to the counter electrode and the reference electrode. The ion conductivity of the solid electrolyte material of Example 1 was measured by an electrochemical impedance measurement method at room temperature.

Fig. 4 is a graph showing a cole-cole plot obtained by impedance measurement of the solid electrolyte material of Example 1.

In Fig. 4, the real value of impedance at the measurement point where the absolute value of the phase of the complex impedance was the smallest was regarded as the resistance value of the solid electrolyte material against ion conduction. Regarding the real value, see the arrow $R_{SE}$ shown in Fig. 4.

The ion conductivity was calculated using the resistance value based on the following mathematical expression (2):

$$\sigma = (R_{SE} \times S/t)^{-1} \quad (2).$$

Here, $\sigma$ represents ion conductivity; S represents the contact area of a solid electrolyte material with the punch upper part 301 (equal to the cross-sectional area of the hollow part of the die 302 in Fig. 3); $R_{SE}$ represents the resistance value of the solid electrolyte material in impedance measurement; and t represents the thickness of the solid electrolyte material (i.e., equal to the thickness of the layer formed from the powder 101 of the solid electrolyte material in Fig. 3) applied with a pressure. The ion conductivity of the solid electrolyte material of Example 1 measured at room temperature was $1.03 \times 10^{-4}$ S/cm.

[Production of battery]

The solid electrolyte material of Example 1, $Li_4Ti_5O_{12}$, and a carbon fiber (VGCF) were provided at a mass ratio of 30 : 65 : 5 in a dry argon atmosphere. These materials were mixed in a mortar. Thus, a mixture was obtained. VGCF is a registered trademark of Resonac Corporation.

An argyrodite-type sulfide solid electrolyte $Li_6PS_5Cl$ (80 mg), the solid electrolyte material (20 mg) of Example 1, the above mixture (15 mg), and VGCF (2 mg) were stacked in this order in an insulating tube having an inner diameter of 9.5 mm. A pressure of 740 MPa was applied to this layered product to form a solid electrolyte layer and an electrode.

Subsequently, metal In foil, metal Li foil, and metal In foil were stacked in this order on the solid electrolyte layer. A pressure of 40 MPa was applied to this layered product to form a counter electrode.

Subsequently, a current collector formed from stainless steel was attached to the electrode and the counter electrode, and a current collecting lead was attached to the current collector.

Finally, the inside of the insulating tube was isolated from the outside atmosphere using an insulating ferrule to seal the inside of the tube. Thus, a battery was obtained as a charge and discharge test cell of Example 1.

[Charge and discharge test]

Fig. 4 is a graph showing the initial discharge characteristics of the battery of Example 1. The initial charge and discharge characteristics were measured by the following method.

The battery of Example 1 was disposed in a thermostat of 25°C.

The battery of Example 1 was charged at a current density of 17.1 $\mu$A/cm$^2$ until the voltage reached 0.58 V. The current density corresponds to 0.01 C rate.

Subsequently, the battery of Example 1 was discharged at a current density of 17.1 $\mu$A/cm$^2$ until the voltage reached 1.9 V. The current density corresponds to 0.01 C rate.

As the result of the charge and discharge test, the battery of Example 1 had an initial discharge capacity of 268.49

μAh.

(Examples 2 to 7 and Comparative Examples 1 and 2)

In Examples 2 to 7, as raw material powders, $Li_2O$, $La_2O_3$, and $LaI_3$ were provided at a molar ratio of (a/2) : ((b - 1)/2) : 1.0. The values of "a" and "b" are shown in Table 1.

In Comparative Example 1, as raw material powders, LiI, $La_2O_3$, and $LaBr_3$ were provided at a molar ratio of LiI : $La_2O_3$ : $LaBr_3$ of 3 : 1 : 1.

In Comparative Example 2, as raw material powders, LiCl, $La_2O_3$, and $LaBr_3$ were provided at a molar ratio of LiCl : $La_2O_3$ : $LaBr_3$ of 3 : 1 : 1.

Solid electrolyte materials of Examples 2 to 7 and Comparative Examples 1 and 2 were obtained as in Example 1 except for the above matters.

The ion conductivity of each of the solid electrolyte materials of Examples 2 to 7 and Comparative Examples 1 and 2 was measured ad in Example 1. The measurement results are shown in Table 1.

[Table 1]

| | Composition | a | b | Ion conductivity [S/cm] |
|---|---|---|---|---|
| Example 1 | $Li_{2.0}La_{1.0}OI_{3.0}$ | 2.0 | 1.00 | $1.03\times10^{-4}$ |
| Example 2 | $Li_{1.4}La_{1.2}OI_{3.0}$ | 1.40 | 1.20 | $1.95\times10^{-4}$ |
| Example 3 | $Li_{1.2}La_{1.27}OI_{3.0}$ | 1.20 | 1.27 | $2.01\times10^{-4}$ |
| Example 4 | $Li_{1.0}La_{1.33}OI_{3.0}$ | 1.00 | 1.33 | $2.23\times10^{-4}$ |
| Example 5 | $Li_{0.8}La_{1.4}OI_{3.0}$ | 0.80 | 1.40 | $1.98\times10^{-4}$ |
| Example 6 | $Li_{0.6}La_{1.47}OI_{3.0}$ | 0.60 | 1.47 | $8.94\times10^{-5}$ |
| Example 7 | $Li_{0.5}La_{1.50}OI_{3.0}$ | 0.50 | 1.50 | $5.58\times10^{-5}$ |
| Comparative Example 1 | $Li_{1.0}La_{1.0}OBr_{0.1}I_{3.0}$ | 1.00 | 1.00 | $2.25\times10^{-9}$ |
| Comparative Example 2 | $Li_{1.0}La_{1.0}OBr_{1.0}Cl_{1.0}$ | 1.00 | 1.00 | $3.37\times10^{-7}$ |

(Consideration)

As obvious from Table 1, the solid electrolyte materials of Examples 1 to 7 had high lithium conductivity of greater than or equal to $5\times10^{-5}$ S/cm at room temperature.

As obvious by comparing Examples 1 to 7 with Comparative Examples 1 and 2, when X is I only, the ion conductivity of the solid electrolyte material was higher than that when X includes Br or Cl.

The battery of Example 1 was charged and discharged at room temperature.

Since the solid electrolyte materials of Examples 1 to 7 do not contain sulfur, hydrogen sulfide is not generated.

As described above, the solid electrolyte material according to the present disclosure can improve lithium ion conductivity while preventing the generation of hydrogen sulfide. The solid electrolyte material of the present disclosure is suitable for providing a battery that can be well charged and discharged.

Industrial Applicability

The solid electrolyte material and method for manufacturing it of the present disclosure are used in, for example, a battery (e.g., an all-solid-state lithium ion secondary battery).

Reference Signs List

100 solid electrolyte particle
101 powder of solid electrolyte material
201 positive electrode
202 electrolyte layer
203 negative electrode

204 positive electrode active material particle
205 negative electrode active material particle
300 compression molding dies
301 punch upper part
302 die
303 punch lower part
1000 battery
1100 electrode material

## Claims

**1.** A solid electrolyte material consisting of:

Li, La, O, and I,
wherein the solid electrolyte material is represented by a following compositional formula (1):

$$Li_aLa_bOI_c \qquad (1)$$

wherein $0 < a$, $0 < b$, $(a + b) < 4.0$ and $c = 3.0$ are satisfied.

**2.** The solid electrolyte material according to claim 1, wherein in the compositional formula (1), $0.5 \leq a \leq 2.3$ and $0.7 \leq b \leq 1.5$ are satisfied.

**3.** The solid electrolyte material according to claim 1 or 2, wherein in the compositional formula (1), $0.5 \leq a \leq 2.0$ and $1.0 \leq b \leq 1.5$ are satisfied.

**4.** The solid electrolyte material according to any one of claims 1 to 3, wherein in the compositional formula (1), $0.8 \leq a \leq 2.0$ and $1.0 \leq b \leq 1.4$ are satisfied.

**5.** A battery (1000) comprising:

a positive electrode (201);
a negative electrode (203); and
an electrolyte layer (202) disposed between the positive electrode (201) and the negative electrode (203),
wherein at least one selected from the group consisting of the positive electrode (201), the negative electrode (203), and the electrolyte layer (202) contains the solid electrolyte material according to any one of claims 1 to 4.

## Patentansprüche

**1.** Ein Festelektrolytmaterial bestehend aus:

Li, La, O und I,
wobei das Festelektrolytmaterial durch die folgende Zusammensetzungsformel (1) dargestellt wird:

$$Li_aLa_bOI_c \qquad (1)$$

wobei $0 < a$, $0 < b$, $(a + b) < 4{,}0$ und $c = 3{,}0$ erfüllt sind.

**2.** Das Festelektrolytmaterial nach Anspruch 1, wobei in der Zusammensetzungsformel (1) $0{,}5 \leq a \leq 2{,}3$ und $0{,}7 \leq b \leq 1{,}5$ erfüllt sind.

**3.** Das Festelektrolytmaterial nach Anspruch 1 oder 2, wobei in der Zusammensetzungsformel (1) $0{,}5 \leq a \leq 2{,}0$ und $1{,}0 \leq b \leq 1{,}5$ erfüllt sind.

**4.** Das Festelektrolytmaterial nach einem der Ansprüche 1 bis 3, wobei in der Zusammensetzungsformel (1) $0{,}8 \leq a \leq 2{,}0$ und $1{,}0 \leq b \leq 1{,}4$ erfüllt sind.

**5.** Eine Batterie (1000) umfassend:

eine positive Elektrode (201);
eine negative Elektrode (203); und
eine zwischen der positiven Elektrode (201) und der negativen Elektrode (203) angeordnete Elektrolytschicht (202),
wobei mindestens eine der folgenden Komponenten, ausgewählt aus der Gruppe bestehend aus der positiven Elektrode (201), der negativen Elektrode (203) und der Elektrolytschicht (202), das Festelektrolytmaterial nach einem der Ansprüche 1 bis 4 enthält.

## Revendications

**1.** Matériau d'électrolyte solide consistant en :

Li, La, O, et I,
dans lequel le matériau d'électrolyte solide est représenté par la formule de composition suivante (1) :

$$Li_aLa_bOI_c \qquad (1)$$

où 0 < a, 0 < b, (a + b) < 4,0 et c = 3,0 sont satisfaits.

**2.** Matériau d'électrolyte solide selon la revendication 1, dans lequel dans la formule de composition (1), 0,5 ≤ a ≤ 2,3 et 0,7 ≤ b ≤ 1,5 sont satisfaits.

**3.** Matériau d'électrolyte solide selon la revendication 1 ou 2, dans lequel dans la formule de composition (1), 0,5 ≤ a ≤ 2,0 et 1,0 ≤ b ≤ 1,5 sont satisfaits.

**4.** Matériau d'électrolyte solide selon l'une quelconque des revendications 1 à 3, dans lequel dans la formule de composition (1), 0,8 ≤ a ≤ 2,0 et 1,0 ≤ b ≤ 1,4 sont satisfaits.

**5.** Batterie (1000) comprenant :

une électrode positive (201) ;
une électrode négative (203) ; et
une couche d'électrolyte (202) disposée entre l'électrode positive (201) et l'électrode négative (203),
dans laquelle au moins l'une sélectionnée parmi le groupe constitué de l'électrode positive (201), de l'électrode négative (203) et de la couche d'électrolyte (202) contient le matériau d'électrolyte solide selon l'une quelconque des revendications 1 à 4.

FIG. 1

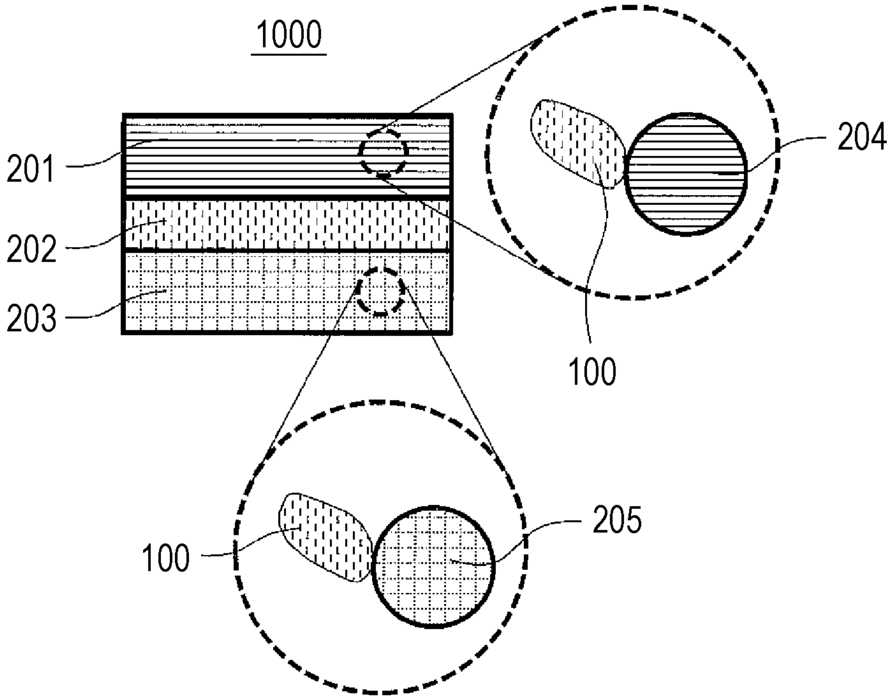


FIG. 2

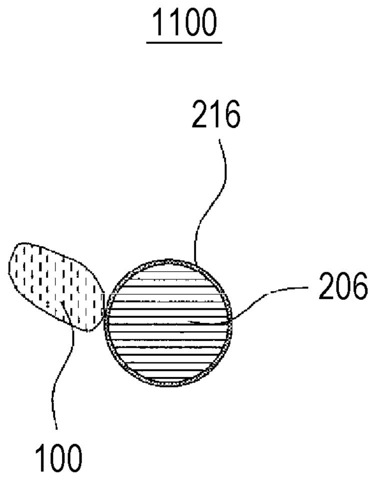

FIG. 3

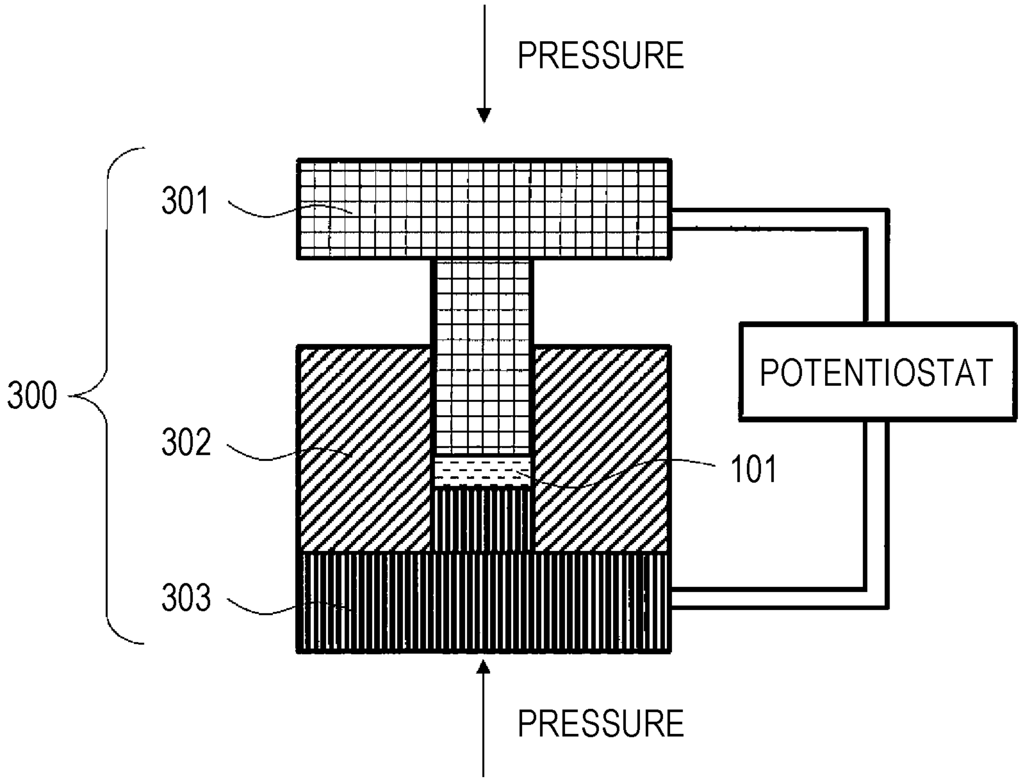
PRESSURE
301
300
302
303
101
POTENTIOSTAT
PRESSURE

FIG. 4

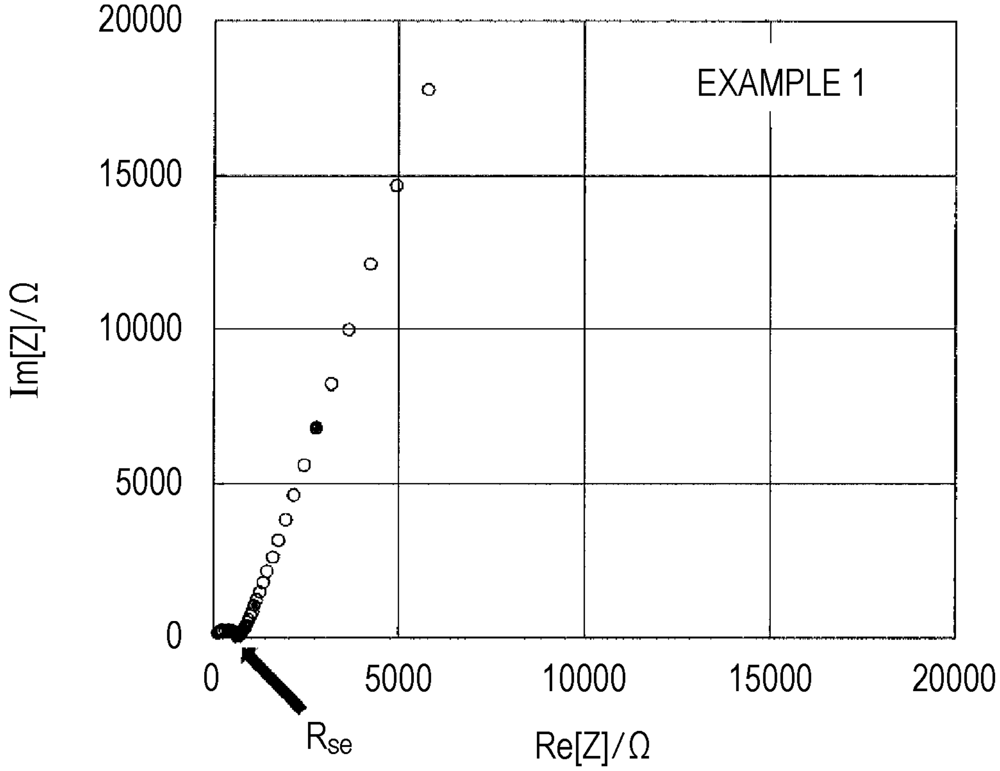
EXAMPLE 1
Im[Z]/Ω
Re[Z]/Ω
Rse
0
5000
10000
15000
20000

FIG. 5

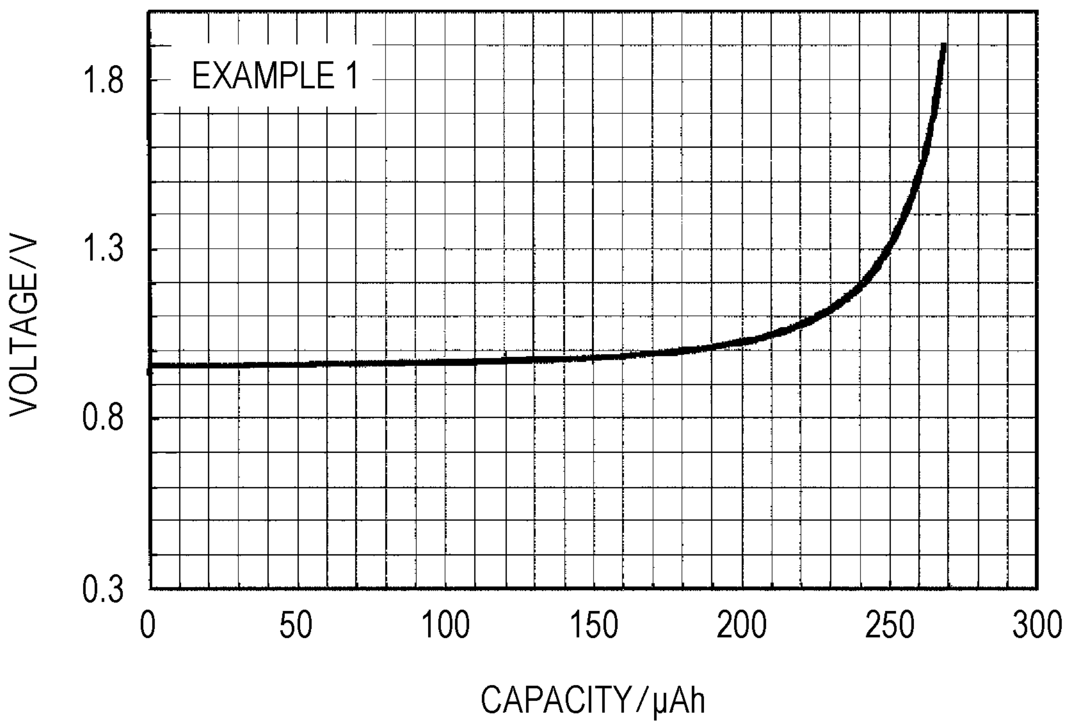
EXAMPLE 1
VOLTAGE/V
1.8
1.3
0.8
0.3
0
50
100
150
200
250
300
CAPACITY/µAh

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020137043 A1
- WO 2021002064 A